# EUROPEAN PATENT SPECIFICATION

(11) **EP 4 017 618 B1**
(45) Date of publication and mention of the grant of the patent: **23.08.2023**
(21) Application number: 20767976.2
(22) Date of filing: 19.08.2020
(51) Int. Cl.: B01D 63/02, B01D 63/04, C02F 3/12

(54) **POTTING SYSTEM WITH POTTING UNIT HAVING COMPRESSION SEAL**
VERGUSSSYSTEM MIT VERGUSSEINHEIT MIT KOMPRESSIONSDICHTUNG
SYSTÈME D'EMPOTAGE AVEC UNITÉ D'EMPOTAGE À JOINT DE COMPRESSION

(30) Priority: 23.08.2019 EP 19193478
(43) Date of publication of application: 29.06.2022
(73) Proprietor: Oxymem Limited, Athlone, Co. Westmeath N37 CK06 (IE)
(72) Inventor: SYRON, Eoin, Bray, Co. Wicklow (IE); BYRNE, Wayne, Rathcoffey, Co. Kildare (IE); LYNCH, Donal, Dublin Road Portlaoise, Co. Laois R32 PVY2 (IE); HEFFERNAN, Barry, Galway, Co. Galway (IE)
(74) Representative: FRKelly
(86) International application number: PCT/EP2020/073199
(87) International publication number: WO 2021/037632

(56) References cited:
- DE-A1- 10 004 863
- KR-B1- 100 646 001
- US-A- 4 031 012
- US-A- 4 876 006
- Glassco: "Turnover Flange Septa, Non Serrated in Natural Rubber - Laboratory Glassware Manufacturer Exporter from India", , 28 October 2018 (2018-10-28), XP055650461, Retrieved from the Internet: URL:https://web.archive.org/web/2018102817 4709/http://glasscolabs.com/product/turnov er-flange-septa-non-serrated-in-natural-ru bber/ [retrieved on 2019-12-06]

## Description

### Field of the invention

The invention relates to a potting system for use in potting or holding hollow fibre membranes together.

### Background of the invention

The Membrane Aerated Biofilm Reactor (MABR) or Membrane Supported Biofilm Reactor (MSBR) is one of several types of reactors which uses a submerged membrane module. In the MABR, a gas (usually oxygen in the form of air) is supplied to inside of a hollow fibre membrane and a biofilm is allowed to develop on the other side of the membrane. The biofilm is then used for treating water and or wastewater. The biofilm does this by removing carbonaceous pollutants along with nitrifying/denitrifying the nitrogen-based pollutants, and/or perform xenobiotic biotreatment of the wastewater constituents. The membrane used in the MABR is an air/oxygen/hydrogen (gas) permeable membrane (often a hollow fibre membrane) that provides an interface between the fluid to be treated (fluid phase) and an air/oxygen/hydrogen supply (gas phase). Typically, a biofilm consisting of a heterogeneous population of bacteria (micro-organisms) (generally including nitrifying, denitrifying, and heterotrophic, bacteria) grows on the liquid phase side of the membrane. MABRs can achieve bubble-less aeration and high oxygen utilization efficiency (up to 100%).

Membranes form a barrier between two fluids but allow the passage of specific molecules or particles of specific size between these fluids. It is very important when manufacturing membrane modules that the two fluids are kept apart and that there are no defects in the membranes or in the potting that holds the membranes together and seals the membranes to keep the fluids on either side of the membrane apart.

Membranes can be found in one of three configurations: hollow fibre, flat sheet or spiral wound. Membrane modules are generally found in either tubular or a submerged configuration. In submerged membrane modules, the membranes are generally configured in hollow fibre or flat sheet configurations. With hollow fibre modules, various potting techniques are used to ensure that the membranes are held together and that the fluid inside and outside of the membrane are not in direct communication. In some potting techniques several hollow fibre membranes are brought together into a bunch or an array and a wax or similar material is placed inside the ends of the hollow fibres. The sealed ends are dipped into the potting agent, which is generally a liquid polymer, or the potting agent is poured or placed over and around the ends of the hollow fibre membranes in a mould which gives the potting its required shape. As is described in U.S. Pat. No. 5,639,373, the polymer is allowed to solidify, and it must bond well with the membrane material to ensure that the membranes do not come loose and compromise the integrity of the membrane module. The solidified potting holds the membranes together and allows for membranes to be assembled into the module. Ensuring that the potting agent has wetted each of the hollow fibre membranes is important. The liquid polymer must have a low enough viscosity to flow in between the hollow fibres and bond to the surface. The potting agent must also be chemically compatible with the membrane so that it actively bonds to the surface. Potting of membrane is the most difficult part of membrane module manufacture and is the reason for most membrane module failures.

In a submerged module these potted membranes are connected to a header or manifold by being clamped or adhered to ensure there is a good seal between the potted membranes and the header or manifold, preventing cross contamination between the two fluids. To ensure that a good seal is achieved, an adhesive is used, which bonds with both the polymer of the potting agent and the material of the header, whether that is a polymer or another material such as a metal. This is to ensure that no leaks form over time. In many cases the adhesive is the only method of bonding the potted membranes to the header. Over time the adhesive may weaken or be chemically attacked by chemicals or pollutants in water or wastewater, compromising the integrity of the module. The addition of the adhesive also introduces another step in the manufacturing process. In other instances, a seal or gasket can be placed in between the potted membranes and the header. Using an additional seal creates two material interfaces between the potted membranes and the seal, and between the seal and the header. This leads to leaks and as explained above when adhesives are used, a loss of integrity over time resulting in a failed module.

Submerged membranes modules are often used in wastewater applications where the type of pollutants can vary substantially depending on if the application is a municipal or an industrial wastewater, and concentrations of pollutants can vary from hour to hour depending on environmental or upstream conditions. Conditions can be harsh with temperatures ranging from 4°C to 40°C and chemicals such as hypochlorite, acids and bases being used during cleaning procedures. These pollutants in the wastewater and the chemicals used during the cleaning procedures can attack the chemical bonding between the potting and the header, and over time this can become weakened or compromised.

It is the object of the subject invention to overcome at least one of the above-referenced problems.

### Summary of the Invention

The invention relates to a potting system used to hold hollow fibre membranes together such that the potting system has an integrated compressive seal. When a mechanical force is used to push the compressive seal against a header or manifold, complete separation is maintained between the fluids inside and outside of the hollow fibre membranes. The potting system can be used in the manufacture of membrane modules suitable for the transfer of dissolved components from one fluid to another.

In one aspect, there is provided, as set out in the appended claims, a potting system (1) comprising a potting unit (2) having a body (3) comprising a distal end (5), a middle section and a proximal end (7), wherein the body (3) further comprises an integrated compressible seal (4) that is continuous with and perpendicular to the body (3), and is composed of the same material as the potting unit (2).

The material is an elastomer. Preferably the elastomer is selected from a polysiloxane, polyurethane, a natural rubber, nitrile rubber, polyisoprenes and fluoroelastomers. Ideally, the elastomer is a polysiloxane selected from silicone, silicone rubber, silicone resin, silicone foam and silicone caulk.

The integrated compressible seal (4) is positioned at a base (9) of the body (3).

The distal end (5) is adapted to accommodate hollow fibre membranes (10) and wherein membranes (10) are potted in the distal end (5) with a potting agent that is the same material as the potting unit (2). Preferably, the distal end (5) is can be any shape selected from circular, a chevron, a cross, linear, square, rectangular, triangular, hexagonal, other polygonal or circular cross-sectional shapes, an ellipse, a three-pointed star, a four-pointed star, a five-pointed star, and the like.

In one aspect, the potting unit (2) is a single piece.

The potting system (1) further comprises a clamp (20).

The clamp (20) comprise a first part (21) and a second part (22) configured to engage with and maintain a downward force on the integrated compressible seal (4) of the potting unit (2). In particular, the first part (21) comprises a series of spaced-apart hollows (24) which are adapted to accommodate the integrated compressible seal (4) of the potting unit (2).

The second part (22) comprises a series of corresponding spaced-apart hollows (25) which are adapted to accommodate and engage with the middle section of the body (3). In one aspect, the first part (21) comprises a series of male/female connectors (26) which are adapted to engage with a corresponding series of male/female connectors (27) comprised in the second part (22).

In one aspect, the first and second parts (21,22) each have an additional fastening means (28) at an end (29) thereof.

In one aspect, the potting system (1) further comprises a securing means (30) adapted to engage with the clamp (20) and maintain a downward force on the integrated compressible seal (4) of the potting unit 2. Preferably, the securing means (30) engages with the fastening means (28) at the end (29) of the first (21) or second (22) parts.

In one aspect, the body (2) tapers from the distal end (5) towards the proximal end (7).

The proximal end (7) is adapted to engage with a header (50) of a fluid treatment system.

In one aspect, there is provided a fluid treatment system comprising the potting system (1) described above.

In one aspect, there is provided a Membrane Aerated Biofilm Reactor (MABR), a Membrane Supported Biofilm Reactor (MSBR), a Membrane Bioreactor (MBR), a Membrane Contactor or a Membrane Filtration Unit comprising the potting system (1) described above.

The potting system further comprises a clamp, the clamp comprising a first part adapted to engage with the body of the potting unit and a second part adapted to engage with the integrated compressive seal of the potting unit.

In one aspect, the material of construction of the clamp is suitably a durable yet rigid material, for example polypropylene, polyethylene (PE), polyethylene terephthalate copolymer (PETG), amorphous polyethylene terephthalate (APET), and the like.

One of the advantages of the present invention is that the integrated seal in the potting unit is a mechanical seal that is comprised of material that resists any chemical attack and thus prolongs the life of bunches of fibre membranes in systems such as MABRs and MSBRs or other submerged membrane modules. Another advantage is that the individual potting forms used to secure individual bunches of fibre membranes to the header of such systems permits the user to remove any bunch of membranes, whether they are non-functioning or are a bunch of membranes in need or maintenance, without having an affect on the other bunches of membranes connected to the header within the same system, or without the need for solvent for removing the adhesive or damaging the header through cutting or drilling. Another advantage of the present invention is that it reduces the number of chemicals required in the manufacturing process. The reduction in the number of chemicals used in manufacturing not only reduces cost and complexity, but also reduces the environmental impact of the manufacturing and the health and safety risks to personnel.

### Definitions

In the specification, the term "Membrane Aerated Biofilm Reactor (MABR)" should be understood to mean a Membrane Supported Biofilm Reactor (MSBR) for treating wastewater liquids to remove carbonaceous pollutant removal, nitrify/denitrify the pollutants, and/or perform xenobiotic biotreatment of the wastewater constituents. Soluble organic compounds in the liquid are supplied to the biofilm from the biofilm-liquid interface, whereas gas supply to the biofilm is from the biofilm-membrane interface (by diffusing through the membrane). Typically, a biofilm consisting of a heterogeneous population of bacteria (generally including nitrifying, denitrifying, and heterotrophic, bacteria) grows on the fluid phase side of the membrane. MABRs can achieve bubble-less aeration and high oxygen utilization efficiency (up to 100%) and the biofilm can be separated into aerobic/anoxic/anaerobic zones to simultaneously achieve removal of carbonaceous organic pollutants, as well as nitrification and denitrification in a single biofilm. An example of MABRs of the type comprising a lumen containing a gas phase, a liquid phase, and a gas permeable membrane providing an interface between the gas and liquid phases are described by European Patent No. 2 361 367 (University College Dublin).

In the specification, the term "bunch of membranes" should be understood to mean a collection of from 10 to 100,000, 10 to 10,000, 10 to 1,000 or 10 to 100 gas-permeable, hollow membrane fibres, which are potted at either end into a circular bunch or a shaped element such that the ends of the fibres are open. The membranes can be arranged vertically in the MABR, in which case the resulting liquid flow would be parallel to the membranes, or the membranes could be arranged horizontally in the MABR, resulting in a crossflow configuration.

In the specification, the term "potting unit" should be understood to mean a unit that can be used to secure each membrane together to form a bunch of membranes, which can then be connected to a header or a manifold of a fluid treatment system or membrane module. The potting unit is typically a single, continuous piece made from the same material used as the potting agent.

In the specification, the term "potting agent" should be understood to mean any polymer that is suitable for use with securing fibre membranes in a potting unit. The potting unit can also be composed of the potting agent. A suitable polymer is an elastomer.

In the specification, the term "elastomer" should be understood to mean a polymer having viscoelastic properties (a polymer that displays rubber-like elasticity) and having a high failure strain compared to other non-elastic materials. Examples of elastomer polymers include polysiloxanes (*e.g*. silicone, silicone rubber, silicone resin, silicone foam or silicone caulk and variants thereof), polyurethane, and rubber (natural rubber or synthetic rubber such as nitrile rubber, isoprene and fluoroelastomers). The elastomer typically has superior sealing properties, stability across a wide temperature range, is durable and resistant to corrosion.

In the specification, the term "fastening means" should be understood to mean a device that closes or secures two or more objects together. Typically, the fastening means creates a non-permanent joint. Examples include cam locks, male/female fasteners, snap fastener, threaded fastener, snap-fit joints and the like.

In the specification, the term "snap(s)" should be understood to mean, as per the industry standard ("The First Snap-Fit Handbook", 1st Edition, (P. Bonenberger) (2000)) a mechanical joint system where part-to-part attachment is accomplished with locating and locking features (constraint features) that are homogenous with one or the other of the components being joined. Joining requires the (flexible) locking features to move aside for engagement with the mating part, followed by return of the locking feature toward its original position to accomplish the interference required to latch the components together. Locator features, the second type of constraint feature, are inflexible, providing strength and stability in the attachment. Enhancements complete the snap-fit system, adding robustness and user-friendliness to the attachment. The commonest form of snaps is annular (circular connectors), cantilever (hook and recess), and torsional (a latch is attached to a torsion bar or shaft). Snap fits are commonly used as an assembly method for injection moulded parts. The snaps are moulded into the product, so additional parts are not needed to join them together. Additionally, if designed correctly, they can be disassembled and reassembled several times without any problems. A snap fit can either be designed as a permanent snap or a multiple snap. Permanent fits are used in disposable parts that are never meant to be disassembled. Multiple snaps are used in most designs where disassembly for service is expected.

In the specification, the term "distal end" in relation to the potting unit refers to a shaped element or shaped connector and should be understood to mean an element which gives the bunch of membranes a particular shape (e.g. chevron shaped, cross-shaped, linear, square, rectangular, triangular, hexagonal, other polygonal or circular cross-section etc.). This provides a connector end that can be secured in a gas-tight manner to the upper or lower manifolds (or headers), which then become known as potted membranes.

In the specification, the terms "upper manifold" and "lower manifold" should be understood to mean gas manifolds (or headers) which are equipped with ports designed to receive the potting unit, which encompass the bunches of hollow fibre membranes. In addition, a plurality of potting units may be potted directly into the upper and lower gas manifolds to form a continuous bunch of membranes stretching from one end of the manifold to the other. When oriented vertically the top manifold is referred to as the upper manifold and the bottom manifold is referred to as the lower manifold. The upper and lower manifolds are in fluid communication with the internal architecture of all the hollow fibres such that air/gas can flow from the inside of the upper manifold, through the hollow fibres to the lower manifold, or vice versa.

In the specification, the term "membrane module" or "Membrane Aerated Biofilm Reactor (MABR)" should be understood to mean a device into which a number (2-1,000, 2-900, 2-800, 2-750, 2-700, 2-650, 2-600, 2-550, 2-500, 2-450, 2-400, 2-350, 2-300, 2-250, 2-200, 2-150, 2-100, 2-50) of cassettes consisting of hollow fibre membranes can be secured in parallel. The cassettes are generally secured in a frame.

In the specification, the term "fluid" should be understood to mean a liquid or gas, where the liquid can be any such form such as water or wastewater, which should be understood to mean any water that has been adversely affected in quality by anthropogenic influence. Wastewater can originate from a combination of domestic (for example, sewage), industrial, commercial or agricultural activities, surface runoff or stormwater, and from sewer inflow or infiltration.

### Brief description of the drawings

The invention will be more clearly understood from the following description of an embodiment thereof, given by way of example only, with reference to the accompanying drawings, in which:
**Figure 1** illustrates a perspective view of one embodiment of a potting unit of the claimed invention.
**Figure 2A** illustrates a first part of a two-part clamp and **Figure 2B** illustrates a second part of the two-part clamp of the claimed invention, in which the clamp is configured to engage with and secure the potting unit of Figure 1 to a header or manifold.
**Figure 3** illustrates an end part adapted to engage with the clamp shown in Figures 2A and 2B.
**Figure 4** illustrates the potting unit of Figure 1 engaged with the two-part clamp of Figures 2a, 2b and 3, and forming the potting system of the claimed invention, wherein the potting system is attached to a header of a treatment tank.

### Detailed Description of the Drawings

The invention described herein provides a potting system for use in the manufacture of a fluid treatment system, such as a MABR or MSBR, Membrane Bioreactors (MBRs, which are used for wastewater treatment), Membrane Contactors for gas delivery or gas removal (typically found in the beverage industry or chemical industry), and Membrane Filtration Units (which can be used in the chemical, pharmaceutical, or food and beverage industry), the system comprising a potting unit and a clamp. The potting unit is typically a single piece composed of a potting agent, the same potting agent that is used to secure a bunch of hollow fibre membranes to a potting unit. The potting unit also comprise an integrated compressible seal that is resistant to attack from chemicals or other reagents that may be found within the liquid being treated and also provides a mechanical seal within the treatment system to ensure that liquid either side of the membranes do not mix.

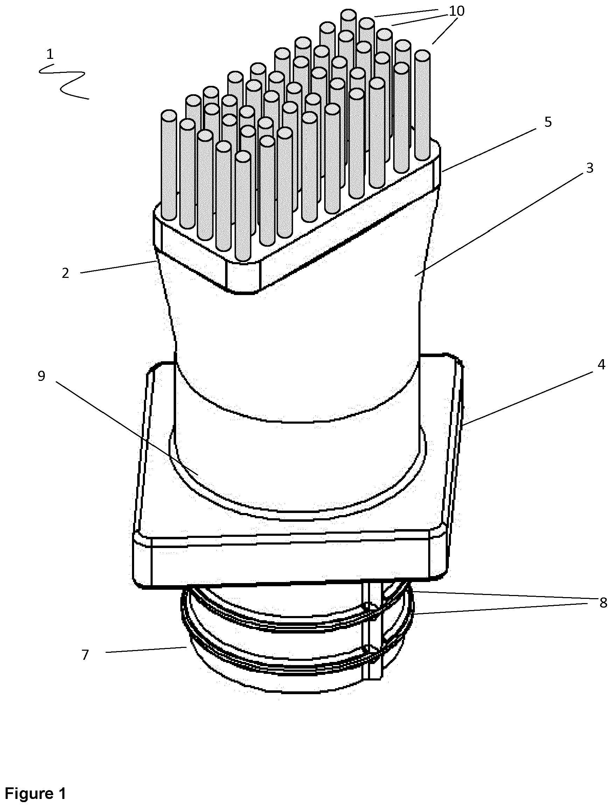

Turning now to the Figures, wherein **Figure 1** illustrates a general embodiment of a potting system of the present invention. Specifically, **Figure 1** illustrates a perspective view of a potting unit of the potting system of the present invention, with hollow fibre membranes in place, and is generally referred to by reference numeral 1. The potting system 1 comprises a potting unit 2 having a body 3 with an integrated compressible seal 4. The body 3 comprises a distal end 5, a middle section, a base 9 and a proximal end 7. The integrated compressible seal 4 is continuous with the middle section of the potting unit 2 and is located towards or at the base 9 of the potting unit 2.

The distal end 5 is adapted to accommodate a bunch of hollow fibre membranes 10, which are potted into the potting unit 2 using a potting agent. The potting unit 2 is typically a continuous piece made from the same potting agent used to secure the hollow fibre membranes 10 in the distal end 5 of the potting unit 2. The potting agent also creates the shape of the integrated compressible seal 4. The distal end 5 around the membranes 10 can acts as a connector that can be shaped in a particular manner (a shaped connector) to space out the membranes 10 to form unique shapes or patterns, such as that described in EP3297749. Alternatively, the distal end 5 can be cylindrical in nature.

In addition, the integrated compressible seal 4 can also be manufactured to any shape that is desired, such as circular, a chevron, a cross, linear, square, rectangular, triangular, hexagonal, other polygonal or circular cross-sectional shapes, an ellipse, a three-pointed star, a four-pointed star, a five-pointed star, and the like.

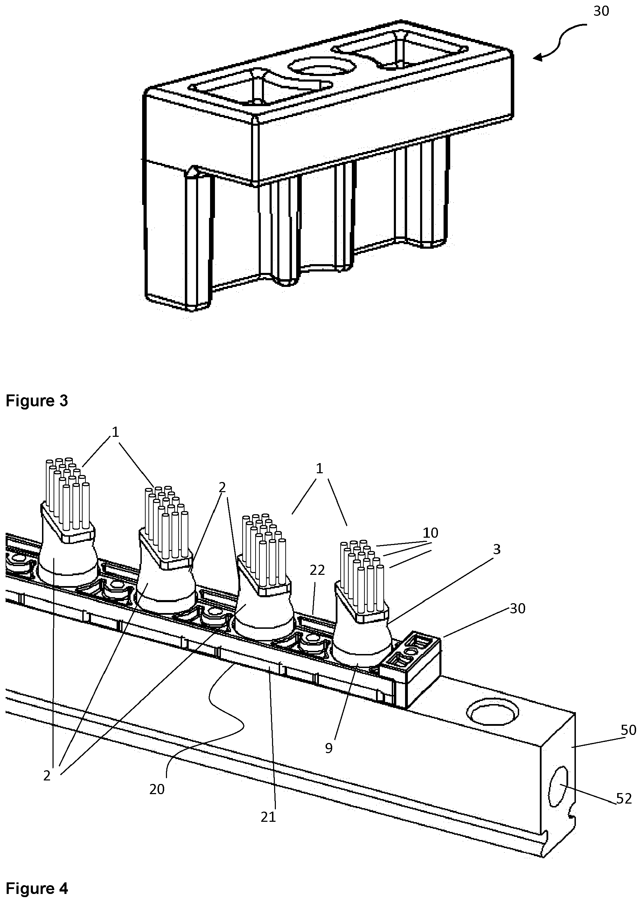

The proximal end 7 typically has connectors 8 that are configured to engage with a header 50 (see Figure 4) of a manifold.

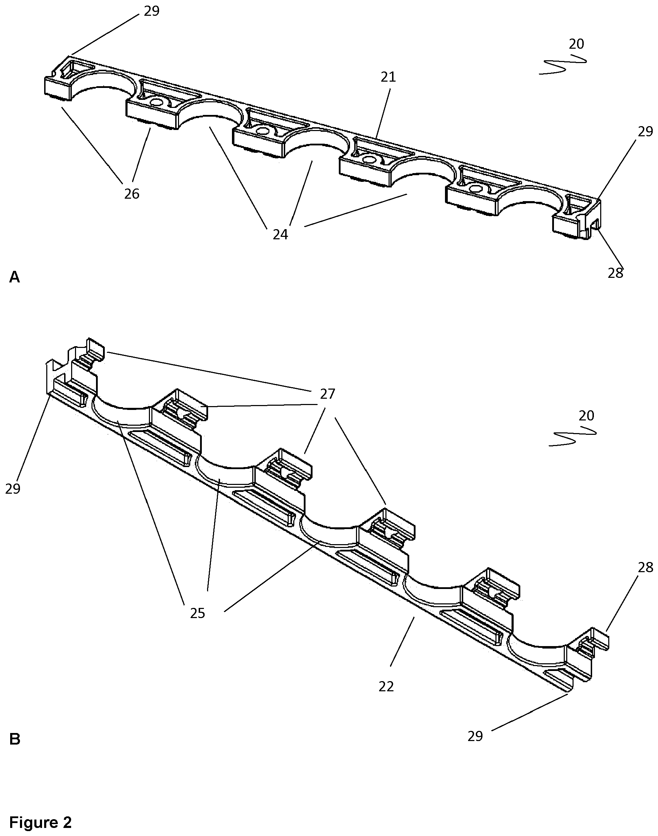

**Figure 2A** shows a first part 21 of a two-part mechanical clamp 20, while **Figure 2B** shows a second part 22 of the two-part mechanical clamp 20. The clamp 20 is adapted to encase the integrated compressible seal 4 when the potting unit 2 is engaged with the header 50 (see Figure 4) of a manifold. The first part 21 comprises a series of spaced-apart hollows 24 which are adapted to accommodate the integrated seal 4 of the potting unit 2, and a series of male/female connectors 26 which are adapted to engage with a corresponding series of male/female connectors 27 of the second part 22. The second part 22 also comprises a series of corresponding spaced-apart hollows 25 which are adapted to accommodate the middle section of the body 3. The clamp 20, when in use, can be used with any fastening means and is configured to maintain a downward force onto the integrated compressible seal 4 of the potting unit 2. The male/female connectors 26,27 typically are snap-fit connectors, however, other well-known and equally practical male/female fastening means can also be used, such as a nut and bolt arrangement, a cable tie arrangement, a coupling, a hook, a latch, a lock, a lug, a rivet and a screw. The first part 21 and second part 22 each have an additional fastening means 28 at either end 29 thereof, which is adapted to engage with a securing means 30 (see **Figure 3**). The securing means 30 is adapted to lock the two-part clamp 20 in place and maintain a downward force onto the integrated compressible seal 4 of the potting unit 2. The clamp 20 can provide additional downward force at the end of a cassette of a module reactor and ensure that there is a uniform downward force along the length of the clamp 20.

**Figure 4****:** is an image of the potting system 1 when in use and attached to the header 50 of a module reactor. When in use, the inside of the hollow fibre membranes 10 is in fluid communication with a central channel 52 of the header 50. The header 50 is used to convey the fluid on the inside of the hollow fibre membranes 10 to or from the membranes 10. A treatment module would comprise an upper and lower header 50. The upper and lower headers 50 are connected through a manifold or piping system. The headers 50 maintain the separation of the two fluids in the module reactors.

Membranes used in the MABR are in most cases dense membranes. These membranes do not have pores but instead allow the diffusion of gas molecules through their the inter polymeric lattice. The most common materials used are Poly DiMethyl Siloxane (Silicone) or Poly Methyl Pentane. Silicone is often used in non-stick applications due to its low surface energy as well as being used in seals and gaskets due it being elastic and compressible, which can be stretched around a nozzle or nipple and compressed between two surfaces.

Because of silicone's properties it is not always easy to bond to other materials and therefore silicone is often used as the potting agent for silicone membrane because silicone will adhere to itself and it can be chemically bonded to each membrane. Most other potting agents are not compressible once solidified and therefore are not suitable for forming a mechanical seal as set out by the claimed invention. By forming the potting silicone around the membranes in such a manner as to have an integrated seal, mechanical clamps can then be used to keep the potted membranes attached to a header. By forming the potting in such a shape, the potting material can have a compression seal and thus avoids the requirement to bond the potted membranes to a header to ensure complete separation of the fluids on either side of the membrane. The compressive force used on the mechanical seal should be enough to keep the potted membranes in place, but not excessive as to damage the potting silicone and cause tears in the potting silicone. The elastomer used for potting the membranes should be of a similar bond length and use a similar same catalytic cross-linking procedure as that used for forming the hollow fibre membranes to ensure chemical compatibility. The elastomer used for forming the potting should also have the same shore hardness as the polymer used to produce the membranes.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A potting system (1) comprising a potting unit (2) and a clamp (20), the potting unit (2) having a body (3) comprising a distal end (5), a middle section and a proximal end (7), wherein the distal end (5) is adapted to accommodate hollow fibre membranes (10) and the proximal end (7) is adapted to engage with a header (50) of a fluid treatment system, and wherein the body (3) further comprises an integrated compressible seal (4) that is continuous with and perpendicular to the body (3), is positioned at a base (9) of the body (3), and is composed of the same material as the potting unit (2), wherein the material is an elastomer; and wherein the clamp (20) comprises a first part (21) and a second part (22) configured to engage with and maintain a downward force on the integrated compressible seal (4) of the potting unit (2); and wherein the first part (21) comprises a series of spaced-apart hollows (24) which are adapted to accommodate the integrated compressible seal (4) of the potting unit (2), and wherein the second part (22) comprises a series of corresponding spaced-apart hollows (25) which are adapted to accommodate and engage with the middle section of the body (3).

2. The potting system (1) according to Claim 1, wherein the elastomer is selected from a polysiloxane, polyurethane, a natural rubber, nitrile rubber, polyisoprenes and fluoroelastomers.

3. The potting system (1) according to Claim 2, wherein the elastomer is a polysiloxane selected from silicone, silicone rubber, silicone resin, silicone foam and silicone caulk.

4. The potting system (1) according to any one of the preceding claims, wherein membranes (10) are potted in the distal end (5) of the potting unit (2) with a potting agent that is the same material as the potting unit (2).

5. The potting system (1) according to Claim 4, wherein the distal end (5) of the potting unit (2) can be any shape selected from circular, a chevron, a cross, linear, square, rectangular, triangular, hexagonal, other polygonal or circular cross-sectional shapes, an ellipse, a three-pointed star, a four-pointed star, a five-pointed star.

6. The potting system (1) according to any one of the preceding claims, wherein the potting unit (2) is a single piece.

7. The potting system (1) according to any one of the preceding Claims, wherein the first part (21) of the clamp (20) comprises a series of male/female connectors (26) which are adapted to engage with a corresponding series of male/female connectors (27) comprised in the second part (22) of the clamp (20).

8. The potting system (1) according to any one of the preceding Claims, wherein the first and second parts (21,22) of the clamp (20) each have an additional fastening means (28) at an end (29) thereof

9. The potting system (1) according to any one of the preceding Claims, further comprising a securing means (30) adapted to engage with the clamp (20) and maintain a downward force on the integrated compressible seal (4) of the potting unit 2.

10. The potting system (1) according to any one of the preceding claims, wherein the body (3) of the potting unit (2) tapers from the distal end (5) towards the proximal end (7).

11. The potting system (1) according to Claim 9, when dependent on Claim 8, wherein the securing means (30) engages with the fastening means (28) at the end (29) of the first (21) or second (22) parts of the clamp (20).

12. The potting system (1) according to Claim 1, wherein the material of the clamp comprises a durable yet rigid material selected from a polypropylene, polyethylene (PE), polyethylene terephthalate copolymer (PETG) and amorphous polyethylene terephthalate (APET).

13. A fluid treatment system comprising the potting system (1) of any one of the preceding claims.

14. A Membrane Aerated Biofilm Reactor (MABR), a Membrane Supported Biofilm Reactor (MSBR), a Membrane Bioreactor (MBR), a Membrane Contactor or a Membrane Filtration Unit comprising the potting system (1) of any one of Claims 1 to 13.

## Patentansprüche

1. Vergusssystem (1), umfassend eine Vergusseinheit (2) und eine Klemme (20), wobei die Vergusseinheit (2) einen Körper (3) aufweist, der ein distales Ende (5), einen mittleren Abschnitt und ein proximales Ende (7) umfasst, wobei das distale Ende (5) so angepasst ist, dass es Hohlfasermembranen (10) aufnimmt, und das proximale Ende (7) so angepasst ist, dass es mit einem Kopfstück (50) eines Fluid-Behandlungssystems in Eingriff kommt, und wobei der Körper (3) ferner eine integrierte komprimierbare Dichtung (4) umfasst, die mit dem Körper (3) durchgehend und senkrecht zu diesem ist, an einer Basis (9) des Körpers (3) positioniert ist und aus demselben Material wie die Vergusseinheit (2) besteht, wobei das Material ein Elastomer ist; und wobei die Klemme (20) einen ersten Teil (21) und einen zweiten Teil (22) umfasst, die so konfiguriert sind, dass sie mit der integrierten komprimierbaren Dichtung (4) der Vergusseinheit (2) in Eingriff kommen und eine nach unten gerichtete Kraft aufrechterhalten; und wobei der erste Teil (21) eine Reihe von beabstandeten Vertiefungen (24) umfasst, die so angepasst sind, dass sie die integrierte komprimierbare Dichtung (4) der Vergusseinheit (2) aufnehmen, und wobei der zweite Teil (22) eine Reihe von entsprechenden beabstandeten Vertiefungen (25) umfasst, die so angepasst sind, dass sie den mittleren Abschnitt des Körpers (3) aufnehmen und in diesen eingreifen.

2. Vergusssystem (1) nach Anspruch 1, wobei das Elastomer ausgewählt ist aus einem Polysiloxan, Polyurethan, einem Naturkautschuk, Nitrilkautschuk, Polyisoprenen und Fluorelastomeren.

3. Vergusssystem (1) nach Anspruch 2, wobei das Elastomer ein Polysiloxan ist, ausgewählt aus Silikon, Silikonkautschuk, Silikonharz, Silikonschaum und Silikondichtmasse.

4. Vergusssystem (1) nach einem der vorhergehenden Ansprüche, wobei Membranen (10) im distalen Ende (5) der Vergusseinheit (2) mit einem Vergussmittel vergossen sind, das aus dem gleichen Material wie die Vergusseinheit (2) besteht.

5. Vergusssystem (1) nach Anspruch 4, wobei das distale Ende (5) der Vergusseinheit (2) eine beliebige Form aufweisen kann, die ausgewählt ist aus kreisförmig, einem Chevron, einem Kreuz, linear, quadratisch, rechteckig, dreieckig, hexagonal, anderen polygonalen oder kreisförmigen Querschnittsformen, einer Ellipse, einem dreizackigen Stern, einem vierzackigen Stern, einem fünfzackigen Stern.

6. Vergusssystem (1) nach einem der vorhergehenden Ansprüche, wobei die Vergusseinheit (2) ein einziges Teil ist.

7. Vergusssystem (1) nach einem der vorhergehenden Ansprüche, wobei der erste Teil (21) der Klemme (20) eine Reihe von Stecker-/Buchsen-Verbindern (26) umfasst, die dazu angepasst ist, dass sie mit einer entsprechenden Reihe von Stecker-/Buchsen-Verbindern (27) in Eingriff gebracht werden kann, die im zweiten Teil (22) der Klemme (20) umfasst sind.

8. Vergusssystem (1) nach einem der vorhergehenden Ansprüche, wobei der erste und der zweite Teil (21, 22) der Klemme (20) jeweils ein zusätzliches Befestigungsmittel (28) an einem Ende (29) davon aufweisen.

9. Vergusssystem (1) nach einem der vorhergehenden Ansprüche, ferner umfassend ein Sicherungsmittel (30), das geeignet ist, mit der Klemme (20) in Eingriff zu kommen und eine nach unten gerichtete Kraft auf die integrierte komprimierbare Dichtung (4) der Vergusseinheit 2 aufrechtzuerhalten.

10. Vergusssystem (1) nach einem der vorangehenden Ansprüche, wobei sich der Körper (3) der Vergusseinheit (2) vom distalen Ende (5) zum proximalen Ende (7) hin verjüngt.

11. Vergusssystem (1) nach Anspruch 9 in Abhängigkeit von Anspruch 8, wobei das Sicherungsmittel (30) mit dem Befestigungsmittel (28) am Ende (29) des ersten (21) oder zweiten (22) Teils der Klemme (20) in Eingriff steht.

12. Vergusssystem (1) nach Anspruch 1, wobei das Material der Klemme ein haltbares, jedoch steifes Material umfasst, das aus einem Polypropylen, Polyethylen (PE), Polyethylenterephthalat-Copolymer (PETG) und amorphem Polyethylenterephthalat (APET) ausgewählt ist.

13. Fluid-Behandlungssystem, umfassend das Vergusssystem (1) nach einem der vorhergehenden Ansprüche.

14. Membranbelüfteter Biofilmreaktor (MABR), membrangestützter Biofilmreaktor (MSBR), Membranbioreaktor (MBR), Membranschütz oder Membranfiltrationseinheit, umfassend das Vergusssystem (1) nach einem der Ansprüche 1 bis 13.

## Revendications

1. Système d'empotage (1) comprenant une unité d'empotage (2) et une pince (20), l'unité d'empotage (2) présentant un corps (3) comprenant une extrémité distale (5), une section centrale et une extrémité proximale (7), dans lequel l'extrémité distale (5) est adaptée pour recevoir des membres de fibre creuse (10) et l'extrémité proximale (7) est adaptée pour se mettre en prise avec un collecteur (50) d'un système de traitement de fluide, et dans lequel le corps (3) comprend en outre un joint compressible intégré (4) qui est continu avec et perpendiculaire au corps (3), est positionné à une base (9) du corps (3), et est composé du même matériau que l'unité d'empotage (2), dans lequel le matériau est un élastomère ; et dans lequel la pince (20) comprend une première partie (21) et une seconde partie (22) configurées pour se mettre en prise avec le joint compressible intégré (4) de l'unité d'empotage (2), et pour maintenir une force vers le bas sur celui-ci ; et dans lequel la première partie (21) comprend une série de creux espacés (24) qui sont adaptés pour recevoir le joint compressible intégré (4) de l'unité d'empotage (2), et dans lequel la seconde partie (22) comprend une série de creux espacés correspondants (25) qui sont adaptés pour recevoir et mettre en prise la section centrale du corps (3).

2. Système d'empotage (1) selon la revendication 1, dans lequel l'élastomère est sélectionné parmi un polysiloxane, le polyuréthane, un caoutchouc naturel, le caoutchouc de nitrile, des polyisoprènes et des fluoroélastomères.

3. Système d'empotage (1) selon la revendication 2, dans lequel l'élastomère est un polysiloxane sélectionné parmi le silicone, le caoutchouc de silicone, la résine de silicone, la mousse de silicone et le mastic de silicone.

4. Système d'empotage (1) selon l'une quelconque des revendications précédentes, dans lequel des membranes (10) sont empotées dans l'extrémité distale (5) de l'unité d'empotage (2) avec un agent d'empotage qui est du même matériau que l'unité d'empotage (2).

5. Système d'empotage (1) selon la revendication 4, dans lequel l'extrémité distale (5) de l'unité d'empotage (2) peut être de n'importe quelle forme sélectionnée parmi une forme circulaire, un chevron, une croix, une forme linéaire, carrée, rectangulaire, triangulaire, hexagonale, d'autres formes polygonales ou en coupe transversale circulaire, une ellipse, une étoile à trois pointes, une étoile à quatre pointes, une étoile à cinq pointes.

6. Système d'empotage (1) selon l'une quelconque des revendications précédentes, dans lequel l'unité d'empotage (2) est d'une seule pièce.

7. Système d'empotage (1) selon l'une quelconque des revendications précédentes, dans lequel la première partie (21) de la pince (20) comprend une série de connecteurs mâles/femelles (26) qui sont adaptés pour se mettre en prise avec une série correspondante de connecteurs mâles/femelles (27) compris dans la seconde partie (22) de la pince (20).

8. Système d'empotage (1) selon l'une quelconque des revendications précédentes, dans lequel la première et la seconde partie (21, 22) de la pince (20) présentent chacune un moyen de fixation supplémentaire (28) à une extrémité (29) correspondante.

9. Système d'empotage (1) selon l'une quelconque des revendications précédentes, comprenant en outre un moyen de sécurisation (30) adapté pour se mettre en prise avec la pince (20) et maintenir une force vers le bas sur le joint compressible intégré (4) de l'unité d'empotage 2.

10. Système d'empotage (1) selon l'une quelconque des revendications précédentes, dans lequel le corps (3) de l'unité d'empotage (2) se rétrécit de l'extrémité distale (5) vers l'extrémité proximale (7).

11. Système d'empotage (1) selon la revendication 9, lorsqu'elle dépend de la revendication 8, dans lequel le moyen de sécurisation (30) se met en prise avec le moyen de fixation (28) à l'extrémité (29) de la première (21) ou de la seconde (22) partie de la pince (20).

12. Système d'empotage (1) selon la revendication 1, dans lequel le matériau de la pince comprend un matériau durable mais rigide sélectionné parmi un polypropylène, un polyéthylène (PE), un copolymère polyéthylène téréphtalate (PETG) et un polyéthylène téréphtalate amorphe (APET).

13. Système de traitement de fluide comprenant le système d'empotage (1) selon l'une quelconque des revendications précédentes.

14. Réacteur de biofilm aéré à membrane (MABR), Réacteur de biofilm supporté par membrane (MSBR), Bioréacteur à membrane (MBR), Contacteur à membrane ou Unité de filtration à membrane comprenant le système d'empotage (1) selon l'une quelconque des revendications 1 à 13.
